## Europäisches Patentamt

## European Patent Office

## Office européen des brevets

(19)

(11) Veröffentlichungsnummer: **0 135 809**
**B1**

(12)

# EUROPÄISCHE PATENTSCHRIFT

(45) Veröffentlichungstag der Patentschrift:
**20.11.86**

(51) Int. Cl.⁴: **H 04 N 5/40**

(21) Anmeldenummer: **84110040.7**

(22) Anmeldetag: **23.08.84**

(54) Schaltung zum Erzeugen eines Fernseh-Zwischenfrequenzsignals mit konstanten Videosignalkomponenten.

(30) Priorität: **25.08.83 DE 3330600**

(43) Veröffentlichungstag der Anmeldung:
**03.04.85 Patentblatt 85/14**

(45) Bekanntmachung des Hinweises auf die Patenterteilung:
**20.11.86 Patentblatt 86/47**

(84) Benannte Vertragsstaaten:
**AT CH DE FR GB IT LI NL**

(56) Entgegenhaltungen:
**DE - B - 1 017 649**

(73) Patentinhaber: **Rohde & Schwarz GmbH & Co. KG,
Mühldorfstrasse 15, D-8000 München 80 (DE)**

(72) Erfinder: **Herwerth, Timm, Birkhuhnweg 32,
D-8045 Ismaning (DE)**

(74) Vertreter: **Graf, Walter, Sckellstrasse 1,
D-8000 München 80 (DE)**

## Beschreibung

Die Erfindung betrifft eine Schaltung laut Oberbegriff des Hauptanspruches.

Bei Fernsehsendern ist es üblich, die dem Modulator zur Erzeugung des Zwischenfrequenzsignals zugeführten Videosignale (Farb- oder Schwarzweiss-Videosignale) zu regenerieren, d.h. die Signalkomponenten, insbesondere den Synchronanteil und den Bildanteil, auf einen konstanten genormten Nennwert zu bringen, bevor daraus dann im Modulator das Zwischenfrequenzsignal gebildet wird.

Dadurch werden Eingangssignalschwankungen vermieden und ein konstanter Modulationsgrad in der Zwischenfrequenzstufe erzielt. Ein Nachteil dieser bekannten Massnahme, das Videosignal vor der Modulation zu regenerieren, ist, dass Eigenfehler der Modulationsstufe nicht mit ausgeregelt werden. Ausserdem ist es schwierig, ein entsprechendes Stellglied für die Regelung in der Video-Ebene zu realisieren, da hier der relative Frequenzumfang sehr gross ist (0 bis 7 MHz).

Es ist Aufgabe der Erfindung, eine Schaltung zum Erzeugen eines Fernseh-Zwischenfrequenzsignals mit konstanten Video-Signalkomponenten zu schaffen, welche diese Nachteile vermeidet und sowohl Eigenfehler in der Modulationsstufe mit berücksichtigt als auch einen einfachen kostengünstigen Aufbau ermöglicht.

Diese Aufgabe wird ausgehend von einer Schaltung laut Oberbegriff des Hauptanspruches durch dessen kennzeichnende Merkmale gelöst. Eine besonders vorteilhafte Weiterbildung ergibt sich aus dem Unteranspruch 2, vorteilhafte Weiterbildungen hiervon ergeben sich aus den übrigen Unteransprüchen.

Zum Einregeln eines konstanten Trägerrestes bei Fernseh-Zwischenfrequenzsignalen eines Fernsehsenders ist es an sich bekannt, das Ausgangssignal der Modulatorstufe in einem Demodulator zu demodulieren, mittels eines Spitzenspannungsmessers die Spitzenspannung des demodulierten Signals zu messen und in Abhängigkeit davon über ein dem Modulator vorgeschaltetes Stellglied das Zwischenfrequenzsignal auf einen vorbestimmten konstanten Spitzenwert zu regeln (DE-PS 943 956). Bei dem hier angewendeten Videosignal entspricht der Synchronspitzenwert der kleinsten und der Weisswert der grössten Trägeramplitude des Zwischenfrequenzsignales. Wird mit dem Spitzenspannungsmesser jeweils der Spitzenspannungswert an den Einschnitten des Signals gemessen und damit das Zwischenfrequenzsignal vor dem Demodulator geregelt, so kann ein konstanter Trägerrest eingestellt werden und es ist auf diese Weise möglich, den über die Wechselspannungsverstärker verlorengegangenen Gleichstrommittelwert im Signal am Ausgang des Modulators wieder herzustellen. Diese bekannte Schaltung wäre in dieser Form für den erfindungsgemässen Zweck nicht ausreichend.

Gemäss der Erfindung erfolgt die Regenerierung des Videosignals nicht mehr wie beim Stand der Technik in der Videoebene vor der Modulation sondern unmittelbar in der Zwischenfrequenzebene unter Einbeziehung des dort vorgesehenen Modulators. Damit werden auch Eigenfehler des Modulators mit ausgeregelt. Eine erfindungsgemässe Schaltung kann auch wesentlich preiswerter aufgebaut werden, da wegen des geringen zu übertragenden relativen Frequenzbereiches in der Zwischenfrequenzebene, das beispielsweise etwa zwischen 30 und 40 MHz schwankt, das Stellglied für den Regelkreis sehr einfach ausgebildet sein kann. Es genügt beispielsweise hierzu eine einfache Pindiode.

Die Erfindung macht sich die Erkenntnis zunutze, dass es für die Regeneration des Videosignals in der Zwischenfrequenzebene genügt, zwei Punkte des Videosignals in der ZF-Ebene konstant zu halten, im einfachsten Fall den sich aus dem Weisswert des Videosignals ergebenden Trägerrest und den sich aus der Gesamtamplitude des Videosignals zusammengesetzt aus Bildanteil und Synchronanteil ergebenden Maximalwert. Damit wird allerdings nicht unter allen Umständen gewährleistet, dass auch tatsächlich das Verhältnis von Bildanteil zu Synchronanteil konstant ist.

Eine besonders vorteilhafte Weiterbildung der Erfindung ergibt sich aus dem Unteranspruch 2. Hiermit ist eine vollständige Regenerierung in der Zwischenfrequenzlage möglich und sowohl die Amplitude des Synchronanteiles als auch die Amplitude des Bildanteiles werden auf vorbestimmten konstanten Werten gehalten, auch wenn diese Videosignalkomponenten am Eingang des Modulators erheblich von den vorgegebenen Nennwerten abweichen.

Die Erfindung wird im folgenden anhand schematischer Zeichnungen an zwei Ausführungsbeispielen näher erläutert.

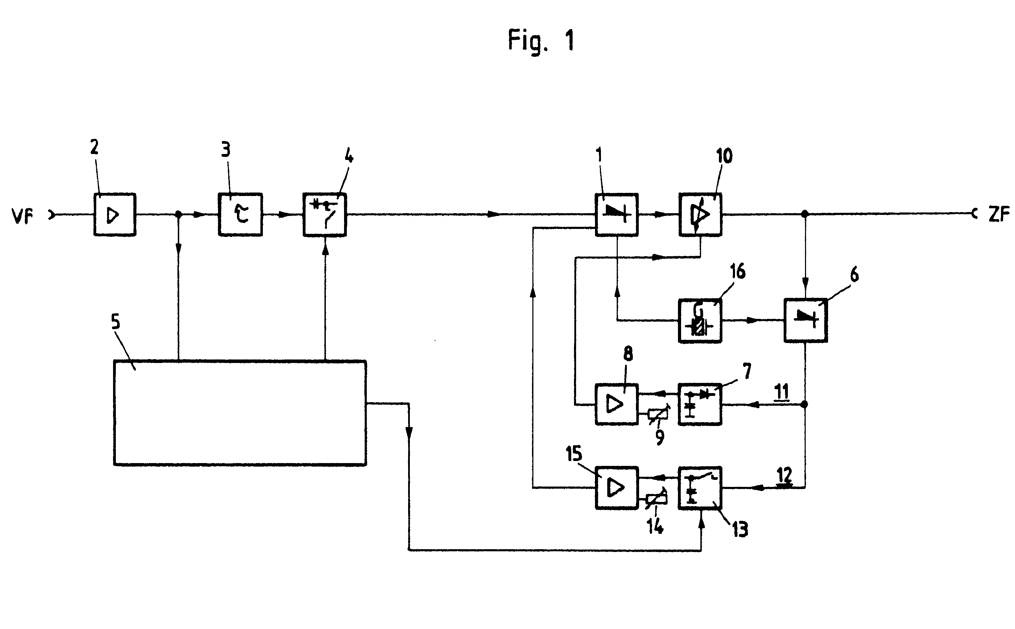

Fig. 1 zeigt das Prinzipschaltbild einer erfindungsgemässen Schaltung, und zwar für die eingangs erwähnte vereinfachte Lösungsmöglichkeit,

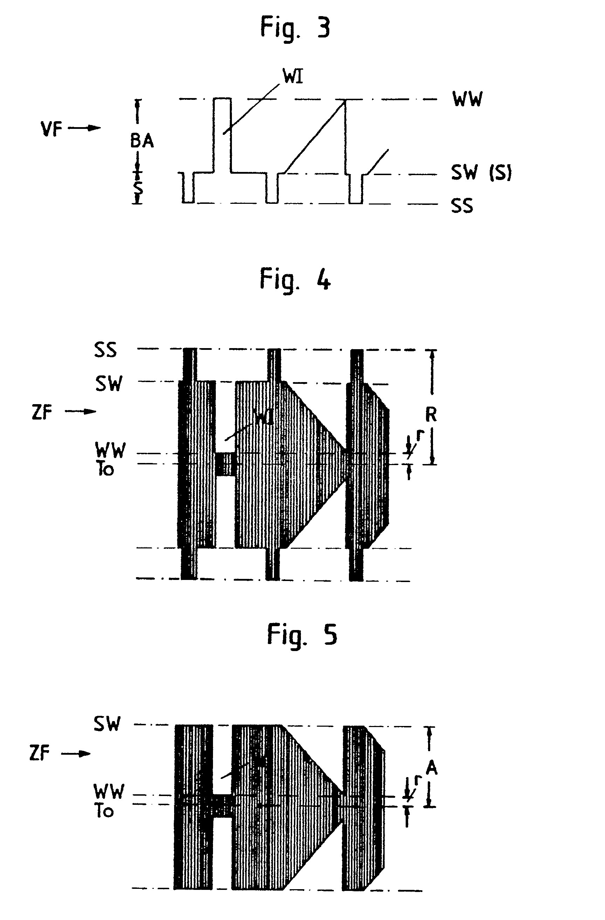

Fig. 3 und 4 zeigen die zugehörigen Signale. Dem Modulator 1 wird die Trägerfrequenz von z. B. 38,9 MHz aus einem Quarzoszillator 16 zugeführt. Das Videosignal VF nach Fig. 3 wird dem Modulator 1 zur Erzeugung des Zwischenfrequenzsignales ZF nach Fig. 4 über einen Vorverstärker 2, ein Laufzeitglied 3 und eine Klemmstufe 4 zugeführt. Das Zwischenfrequenzsignal ZF wird anschliessend über einen nicht dargestellten Mischer auf die gewünschte Endfrequenz umgesetzt und dann der eigentlichen Fernsehsender-Endstufe zugeführt.

Aus dem Videosignal VF wird über eine bekannte Impulsaufbereitungsschaltung 5 der Synchronanteil neu gewonnen, es wird u.a. der Synchronimpuls S und der Bildwechselimpuls V des Videosignals neu gewonnen. Daraus werden dann in dieser Schaltung 5 die Tastimpulse für die übrigen Schaltungsteile abgeleitet. Aus dem Synchronimpuls S wird beispielsweise der Tastimpuls für die Klemmstufe 4 abgeleitet und dadurch in bekannter Weise der Schwarzwert des Videosignals auf einen konstanten Wert gehalten. Über den Bildwechselimpuls V und den Synchronimpuls S wird ausserdem die Prüfzeile des Videosignals ausgewählt, die den sogenannten Prüfzeilen-Weissimpuls WI enthält. Nach der CCIR-Norm ist dieser Prüfzeilen-Weissimpuls beispielsweise in der 17. und 330. Prüfzeile enthalten. Die Lage dieses Prüfzeilen-Weissimpulses in dieser ausgewählten Prüfzeile wird ebenfalls über die Schaltung 5 bestimmt. Die Schaltung 5 ist also so programmiert, dass sie in Abhängigkeit von dem Synchronanteil des Videosignals VF jeweils zu vorbestimmten Zeitpunkten Tastimpulse erzeugt, zu denen vorbestimmte Vorgänge in der Schaltung ausgeführt werden sollen, beispielsweise die Messung des Weisswertes WW des Prüfzeilen-Weissimpulses WI.

Das Ausgangssignal des Modulators 1 wird über einen Synchrondemodulator 6, der ebenfalls vom Oszillator 16 gespeist ist und der die Eigenschaften hat, bei 0 Volt Eingangs-Hochfrequenzspannung exakt auch 0 Volt Ausgangsspannung zu liefern, demoduliert und einem Spitzenspannungsmesser 7 zugeführt, der in diesem Fall die Amplitude R des Zwischenfrequenzsignales ZF misst, d.h. den Spitzenwert der Amplitudenmodulation, die sich gegenüber dem Träger Null $T_0$ für die mit aufmodulierten Synchronspitzenwerte SS des Videosignales in der ZF-Ebene ergeben. Dieser Spitzenwert wird in einem Regelverstärker 8 mit einem vorbestimmten eingestellten Sollwert verglichen und die sich daraus ergebende Regelspannung wird einem dem Modulator 1 nachgeschaltetem Stellglied 10 zugeführt. Auf diese Weise wird über diesen ersten Regelkreis 11 die Amplitude R des ZF-Signales auf einen vorbestimmten konstanten Wert geregelt.

Gleichzeitig wird noch über einen zweiten Regelkreis 12 auf einen konstanten Trägerrest r des ZF-Signales geregelt, und zwar wird hierzu das Ausgangssignal des Demodulators 6 einer Abtastschaltung 13 zugeführt, die gesteuert durch die Schaltung 5 den Maximalwert WW des im Videosignal VF enthaltenen Prüfzeilen-Weissimpulses WI misst.

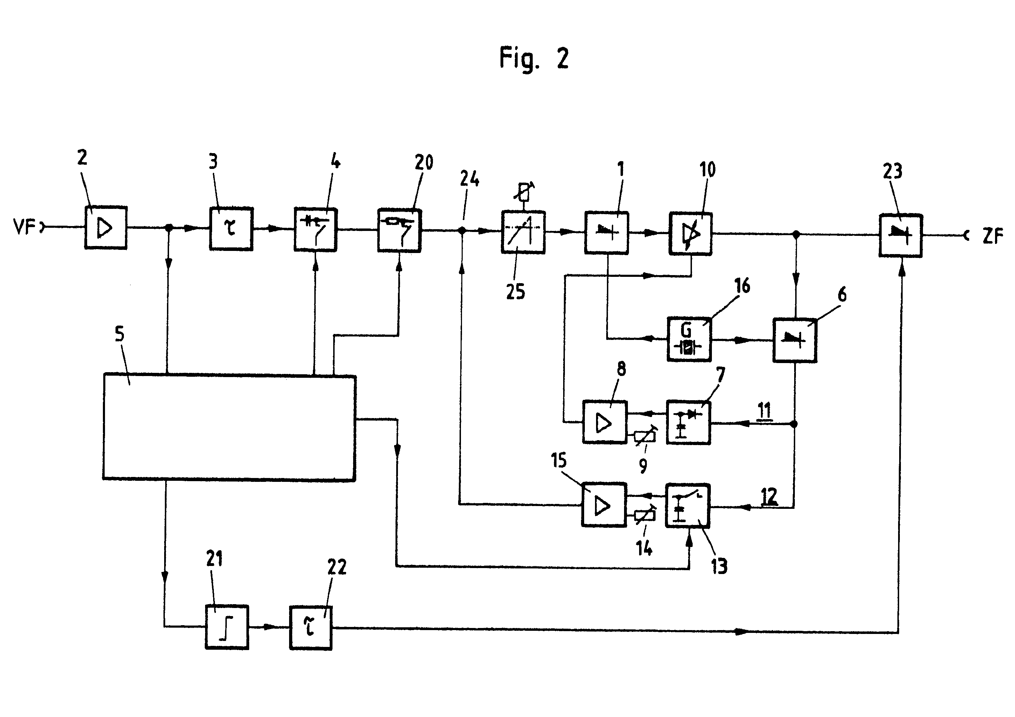

Durch Vergleich mit einem entsprechend eingestellten Sollwert 14 eines weiteren Regelverstärkers 15 wird auf diese Weise eine Regelgrösse für den Trägerrest gewonnen, mit der beispielsweise der Arbeitspunkt des Modulators 1 so geregelt wird, dass dieser Trägerrest r auf einen vorbestimmten konstanten Wert gehalten wird. Die Arbeitspunktverschiebung im Modulator 1 kann beispielsweise in bekannter Weise unmittelbar durch Eingriff in den Modulator 1 erfolgen, eine andere einfache Möglichkeit besteht darin, diese Regelgrösse des Regelkreises 12 einfach dem Videosignal hinzuzuaddieren, das zur Modulation dem Modulator 1 zugeführt wird. Auf diese Weise stellt sich selbsttätig der richtige Arbeitspunkt für den gewünschten konstanten Trägerrest r im Modulator 1 ein. Durch Regeln der Signalkomponenten R und r des ZF-Signals auf konstante Werte ist jedoch noch nicht gewährleistet, dass auch tatsächlich das Verhältnis zwischen Synchronanteil S und Bildanteil BA des Videosignales konstant gehalten wird. Gemäss einer vorteilhaften Weiterbildung der Erfindung wird daher gemäss Fig. 2 über eine zusätzliche Austaststufe 20, die von der Impulsaufbereitungsschaltung 5 gesteuert ist, jeweils der Synchronanteil S des Videosignals VF ausgetastet. Dem Modulator 1 wird also ein Videosignal zur Modulation zugeführt, das nicht mehr diese Synchronanteile S enthält. Gleichzeitig wird der Synchronanteil S über die Impulsaufbereitungsschaltung 5 aus dem Videosignal VF nach dem Verstärker 2 neu gewonnen und in einer Impulsformerstufe 21 in bekannter Weise auf einen konstanten vorgegebenen Amplitudenwert S regeneriert und über ein Laufzeitglied 22 einem weiteren Modulator 23 zugeführt, der dem Stellglied 10 am Ausgang des Verstärkers 1 nachgeschaltet ist. Über den Spitzenspannungsmesser 7 wird in diesem Fall gemäss Fig. 5 auf einen konstanten Wert A des ZF-Signals am Ausgang des Stellgliedes 10 geregelt, da die Synchronanteile S im Modulator 1 ja nicht mit aufmoduliert werden. Der Trägerrest r wird durch den zweiten Regelkreis 12 wie bei der Schaltung nach Fig. 1 wieder auf einen konstanten Wert gehalten. In dem Ausführungsbeispiel nach Fig. 2 erfolgt die Arbeitspunktverschiebung des Modulators 1 zur Regelung auf konstanten Restträger r durch unmittelbares Aufaddieren der Regelspannung des Regelkreises 12 im Addierpunkt 24 auf das dort dem Eingang des Modulators 1 zugeführte Videosignal. Zur Verhinderung von kurzzeitiger Übermodulation während der Regelzeit der Trägerrestregelung ist zwischen diesem Addierpunkt 24 und dem Modulator 1 ein Weisswertbegrenzer 25 angeordnet, durch den bei schnell erfolgenden Weisswertänderungen, auf die der Regelkreis 12 möglicherweise nicht ansprechen kann, der Weisswert auf einen vorgegebenen eingestellten Wert begrenzt wird. Zum Ausgleich der Spitzenlinearität der Leistungsendstufe ist die Impulsformerstufe 21 vorzugsweise in der Amplitude einstellbar ausgeführt, so dass auch der regenerierte Synchronimpuls entsprechend eingestellt werden kann.

## Patentansprüche

1. Schaltung zum Erzeugen eines Fernseh-Zwischenfrequenz-Signals mit konstanten Videosignalkomponenten am Ausgang der Zwischenfrequenz-Modulatorstufe eines Fernsehsenders durch Regeln des Zwischenfrequenzsignals in Abhängigkeit von dem demodulierten Ausgangssignal des Modulators für Videosignale, bei denen der Weisswert (WW) der kleinsten (r) und der Synchronspitzenwert (S) der grössten Trägeramplitude (R) entspricht, dadurch gekennzeichnet, dass in an sich bekannter Weise mittels eines Spitzenspannungsmessers (7) die Spitzenspannung (A bzw. R) des demodulierten Videosignales gemessen und in Abhängigkeit davon über ein dem Modulator (1) nachgeschaltetes Stellglied (10) das Zwischenfrequenzsignal (ZF) auf einen vorbestimmten konstanten Spitzenwert (A bzw. R) geregelt wird, und mittels einer Abtastschaltung (13), die über einen aus einer Impulsaufbereitungsschaltung (5) gewonnenen Prüfzeilen-Tastimpuls gesteuert ist, der Wert (WW) des Prüfzeilen-Weissimpulses (WI) gemessen und in Abhängigkeit davon der Arbeitspunkt des Modulators (1) auf eine vorbestimmte konstante Trägerrestamplitude (r) geregelt wird.

2. Schaltung nach Anspruch 1 mit einer Abtrennstufe zum Abtrennen des Synchronanteiles von den übrigen Signalkomponenten des Videosignales und mit einer Impulsformerstufe zum Erzeugen eines regenerierten konstanten Synchronanteiles, dadurch gekennzeichnet, dass über das dem Modulator (1) nachgeschaltete Stellglied (10) das Zwischenfrequenzsignal (ZF) auf einen konstanten Schwarzwert (A) geregelt wird und mittels eines dem Stellglied (10) nachgeschalteten weiteren Modulators (23) der abgetrennte und regenerierte Synchronanteil (S) des Videosignales (VF) dem Ausgangssignal (ZF) des Modulators (1) wieder aufmoduliert wird.

3. Schaltung nach Anspruch 1 oder 2, dadurch gekennzeichnet, dass von dem gemessenen Weisswert (WW) eine der Sollwertabweichung entsprechende Regelspannung abgeleitet und diese dem dem Modulator (1) zugeführten Videosignal (VF) aufaddiert wird (Addierpunkt 24).

4. Schaltung nach einem der vorhergehenden Ansprüche, dadurch gekennzeichnet, dass vor dem Modulator (1), insbesondere zwischen dem Modulator (1) und dem Addierpunkt (24) der Weisswert-Regelspannung, ein Weisswert-Begrenzer (25) angeordnet ist.

5. Schaltung nach einem der vorhergehenden Ansprüche 2 bis 4, dadurch gekennzeichnet, dass die Impulsformerstufe (21) für den Synchronanteil (S) einstellbar ist.

6. Schaltung nach einem der vorhergehenden Ansprüche, dadurch gekennzeichnet, dass der Demodulator (6) ein Synchrondemodulator ist.

7. Schaltung nach einem der vorhergehenden Ansprüche, dadurch gekennzeichnet, dass das dem Modulator (1) nachgeschaltete Stellglied (10) eine Pindiode ist.

## Claims

1. A circuit for producing a television intermediate-frequency signal with constant video signal components at the output of the intermediate-frequency modulator stage of a television transmitter, by controlling the intermediate-frequency signal in response to the demodulated output signal from the modulator for video signals whose white level (WW) corresponds to the smallest carrier amplitude (r) while the synchronous peak value (S) corresponds to the highest carrier amplitude (R), characterised in that the peak voltage (A or R, respectively) of the demodulated video signal is measured in a per se known manner by means of a peak voltmeter (7) and in response thereto the intermediate-frequency signal (ZF) is controlled to a predetermined constant peak value (A or R, respectively) by means of a control element (10) connected to the output of said modulator (1), and that by means of a scanning circuit (13), which is controlled through a test-line gating pulse obtained from a pulse conditioning circuit (5), the value (WW) of the test-line white pulse (WI) is detected and in response thereto the operating point of said modulator (1) is controlled to a predetermined constant residual carrier amplitude (r).

2. A circuit as claimed in claim 1, comprising an isolating circuit for isolating the synchronous component from the remaining signal components of the video signal, and comprising a pulse forming circuit for producing a regenerated constant synchronous component, characterised in that the intermediate-frequency signal (ZF) is controlled to a constant black level (A) through the control element (10) connected to the modulator (1) output, and that by means of a further modulator (23) connected to the output of the control element (10) the isolated and regenerated synchronous component (S) of the video signal (VF) is again modulated upon the output signal (ZF) from the modulator (1).

3. A circuit as claimed in claim 1 or claim 2, characterised in that a control voltage which corresponds to the set-point deviation is obtained from the detected white level (WW) and is added (summing junction 24) to the video signal (VF) which is supplied to the modulator (1).

4. A circuit as claimed in any of the preceding claims, characterised in that a white-level limiting circuit (25) is provided so as to precede the modulator (1) and is especially disposed intermediate the modulator (1) and the summing junction (24) for the white-level control voltage.

5. A circuit as claimed in any of the preceding claims 2 to 4, characterised in that the pulse forming circuit (21) is adapted to be adjusted to the synchronous component (S).

6. A circuit as claimed in any of the preceding claims, characterised in that the demodulator (6) is a synchronous demodulator.

7. A circuit as claimed in any of the preceding claims, characterised in that the control element (10) connected to the modulator (1) output is a PIN-diode.

## Revendications

1. Circuit pour générer un signal de télévision de fréquence intermédiaire à composantes de signal vidéo constantes à la sortie de l'étage de modulateur de fréquence intermédiaire d'un émetteur vidéo par réglage du signal de fréquence intermédiaire en fonction du signal de sortie démodulé du modulateur pour des signaux vidéo dans lesquels la grandeur de blanc (WW) correspond à la plus petite valeur (r) et à la valeur maximale de synchronisation (S) de la plus grande amplitude (R) de la porteuse, caractérisé en ce que, de manière connue en soi, à l'aide d'un dispositif de mesure de tension de pointe (7), on mesure la tension maximale (A ou R) du signal vidéo démodulé et, en fonction de cela on règle, par l'intermédiaire d'un organe de réglage (10) en aval du modulateur (1), un signal de fréquence intermédiaire (ZF) sur une valeur maximale constante prédéterminée (A ou R) et par l'intermédiaire d'un circuit de détection (13) commandé par une impulsion de détection de lignes de contrôle provenant d'un circuit de préparation d'impulsions (5), on mesure la grandeur (WW) de l'impulsion de blanc (WI) des lignes de contrôle et en fonction de cette mesure, on règle le point de fonctionnement du modulateur (7) sur une amplitude résiduelle de porteuse (r) constante, prédéterminée.

2. Circuit selon la revendication 1, comportant un étage-séparateur pour séparer la partie synchrone des autres composants du signal vidéo et un étage-formeur d'impulsions pour fournir une partie synchrone, constante, régénérée, caractérisé en ce que, par l'organe de réglage (10) en aval du modulateur (1), on règle le signal de fréquence intermédiaire (ZF) sur une valeur de noir (A), constante et à l'aide d'un autre modulateur (23) en aval de l'organe de réglage (10), on module de nouveau la partie synchrone (S) séparée et régénérée du signal vidéo (VF) pour le signal de sortie (ZF) du modulateur (1).

3. Circuit selon la revendication 1 ou 2, caractérisé en ce que l'on dérive, de la valeur de blanc (WW) mesurée, une tension de réglage correspondant à la déviation par rapport à la valeur de consigne et on ajoute cette tension au signal vidéo (VF) appliqué au modulateur (1) (point d'addition 24).

4. Circuit selon l'une des revendications précédentes, caractérisé en ce qu'en amont du modulateur (1), notamment entre le modulateur (1) et le point d'addition (24) de la tension de réglage de la valeur de blanc, il est prévu un limiteur de valeur de blanc (25).

5. Circuit selon l'une des revendications précédentes 2 à 4, caractérisé en ce que l'étage-formeur d'impulsions (21) est réglable pour la partie synchrone (S).

6. Circuit selon l'une des revendications précédentes, caractérisé en ce que le démodulateur (6) est un démodulateur synchrone.

7. Circuit selon l'une des revendications précédentes, caractérisé en ce qu'une diode-Pin est l'organe de réglage (10) en aval du modulateur (1).

Fig. 1

Fig. 2

0 135 809

## Fig. 3

## Fig. 4

## Fig. 5